# EUROPEAN PATENT APPLICATION

(11) **EP 4 589 803 A1**
(43) Date of publication of application: **23.07.2025**
(21) Application number: 24219464.5
(22) Date of filing: 12.12.2024
(51) Int. Cl.: H02J 7/00

(54) **APPARATUS AND METHOD FOR DISCHARGING A BATTERY**

(30) Priority: 08.01.2024 KR 20240002928
(71) Applicant: SAMSUNG SDI CO., LTD., Yongin-si, Gyeonggi-do 17084 (KR)
(72) Inventor: Kim, Sukki, Yongin-si, Gyeonggi-do 17084 (KR); Choi, Jung-Jin, Yongin-si, Gyeonggi-do 17084 (KR); Lee, Jin-Bok, Yongin-si, Gyeonggi-do 17084 (KR)
(74) Representative: Gulde & Partner

(57) **Abstract**

The present disclosure relates to an apparatus and a method for discharging a battery. An apparatus for discharging a battery according to embodiments includes a discharger, a first switch connected between the discharger and the battery, and a charge pump that includes a first capacitor, that is configured to charge the first capacitor with an electric energy charged in the battery when a first control signal indicating a normal state is input, and that is configured to connect the discharger and the battery by operating the first switch with an electric energy charged in the first capacitor when a second control signal indicating an occurrence of a fire event is input.

## Description

### BACKGROUND

### 1. Field

The present disclosure relates to an apparatus, and a method for discharging a battery.

### 2. Description of the Related Art

Unlike a primary battery that is incapable of being charged, a secondary battery is capable of being repeatedly charged and discharged. A low-capacity secondary battery is used in a portable small electronic device, such as a smart phone, a feature phone, a laptop computer, a digital camera, or a camcorder, and a large-capacity secondary battery is widely used as a power source for driving a motor of a hybrid vehicle, an electric vehicle, or the like and an electric power storage device. The secondary battery includes an electrode assembly including a positive electrode and a negative electrode, a case accommodating the electrode assembly, and an electrode terminal connected to the electrode assembly, and the like.

A cell in which an event occurs in the battery, such as an internal foreign substance, an internal short circuit, deterioration, or the like, may cause a safety problem, such as thermal runaway, fire, or the like. If the thermal runaway occurs due to the internal short circuit in the battery, an electron and an ion inside the battery may be concentrated at a point of the short circuit. Thus, a large amount of heat may be generated, and all energy charged in the battery may be released in a state of heat and fire (plasma) so that damage may greatly spread.

The above-described information disclosed in the technology that is the background of this disclosure is only for improving understanding of the background of the present disclosure, and thus may include the information that does not constitute the prior art.

### SUMMARY

The present disclosure provides an apparatus and a method for discharging a battery that may reduce a risk of a fire by distributing energy charged in the battery in a situation where thermal runaway or fire is expected. However, the present disclosure is not limited to the above, and other aspects not mentioned may be clearly understood by those skilled in the art from a description of the present disclosure below.

An apparatus for discharging a battery according to embodiments of the present disclosure includes a discharger, a first switch connected between the discharger and the battery, and a charge pump that includes a first capacitor, that is configured to charge the first capacitor with an electric energy charged in the battery when a first control signal indicating a normal state is input, and that is configured to connect the discharger and the battery by operating the first switch with an electric energy charged in the first capacitor when a second control signal indicating an occurrence of a fire event is input.

The first switch may include a contact point apparatus including contact points respectively connected to the battery and to the discharger, and a contact point driver configured to control a connection between the contact points.

The charge pump may further include a second switch on a first current path for charging the first capacitor with the electric energy charged in the battery, and configured to connect the first current path when the first control signal is input, and a third switch on a second current path for supplying a driving electric power to the contact point driver with the energy charged in the first capacitor, and configured to connect the second current path when the second control signal is input.

The first capacitor may be connected between a first node and a second node, wherein the second switch is connected between the first node and a ground, and wherein the battery is connected between the second node and the ground.

The third switch may be connected between the first node and the contact point driver, wherein the contact point driver is connected between the second node and the third switch.

The charge pump may further include a first diode including an anode terminal connected to the battery, and a cathode terminal connected to the second node, and a second diode including an anode terminal connected to the second node, and a cathode terminal connected to the contact point driver.

The apparatus for discharging the battery may further include a charge pump driver configured to receive a state signal indicating a state of the occurrence of the fire event of the battery, to output the first control signal to the charge pump when the state signal indicates the normal state, and to output the second control signal to the charge pump when the state signal indicates the occurrence of the fire event.

The second switch and the third switch may include a phototransistor, wherein the first control signal and the second control signal include an optical signal.

The charge pump driver may include a buffer configured to transfer the state signal, a first photodiode configured to receive an output signal of the buffer, and to output the first control signal including the optical signal according to the output signal of the buffer, an inverter configured to invert the state signal, and to output the inverted state signal, and a second photodiode configured to receive the inverted state signal from the inverter, and to output the second control signal including the optical signal according to the inverted state signal from the inverter.

The second switch and the third switch may include a transistor, wherein the charge pump driver includes a buffer configured to transfer the state signal, a first photocoupler configured to receive an output signal of the buffer, and to output the first control signal to a control terminal of the second switch according to the output signal of the buffer, an inverter configured to invert the state signal, and to output the inverted state signal, and a second photocoupler configured to receive the inverted state signal from the inverter, and to output the second control signal to a control terminal of the third switch according to the inverted state signal from the inverter.

The apparatus for discharging the battery may further include a fourth switch connected between a negative electrode terminal of the battery and the discharger, wherein the first switch is connected between a positive electrode terminal of the battery and the discharger, and wherein contact point drivers of the first switch and the fourth switch are connected in series on the second current path.

The apparatus for discharging the battery may further include a second capacitor connected between both ends of the contact point driver.

The apparatus for discharging the battery may further include a fifth switch connected between one end of the second capacitor and the contact point driver, and configured to connect a current path supplying an electric energy charged in the second capacitor as a driving electric power of the contact point driver when a third control signal is input, wherein the second capacitor is configured to be charged by a current supplied from the first capacitor when the third switch is turned on in a state in which the fifth switch is turned off, and wherein the second capacitor is configured to supply the electric energy charged in the second capacitor as the driving electric power of the contact point driver when the fifth switch is turned on.

The first switch may include a relay or a contactor, wherein the contact point driver is a coil.

According to the present disclosure, a risk of a fire may be reduced by distributing energy charged in the battery in a situation where thermal runaway or fire is expected or possible.

An aspect that may be obtained through the present disclosure is not limited to the above-described aspect, and other aspects not mentioned may be clearly understood by those skilled in the art from a description of the present disclosure below.

### BRIEF DESCRIPTION OF THE DRAWINGS

The drawings attached to the present specification illustrate embodiments of the present disclosure and serve to further understand a technical idea of the present disclosure together with a detailed description of the present disclosure to be described later, so that the present disclosure should not be construed as being limited to a matter described in the drawings.
FIG. 1 schematically shows an apparatus for discharging a battery according to first one or more embodiments.
FIG. 2 schematically shows a circuit configuration of the apparatus for discharging the battery according to the first one or more embodiments.
FIG. 3A and FIG. 3B are views for describing an operation of a charge pump of the apparatus for discharging the battery according to the first one or more embodiments.
FIG. 4 shows an example including the charge pump using a phototransistor in the apparatus for discharging the battery according to the first one or more embodiments.
FIG. 5 shows an example including the charge pump using a transistor in the apparatus for discharging the battery according to the first one or more embodiments.
FIG. 6 schematically shows an apparatus for discharging the battery according to second one or more embodiments.
FIG. 7 schematically shows an apparatus for discharging the battery according to third one or more embodiments.
FIG. 8 schematically shows a circuit configuration of the apparatus for discharging the battery according to the third one or more embodiments.
FIG. 9 schematically shows an apparatus for discharging the battery according to fourth one or more embodiments.
FIG. 10 schematically shows a circuit configuration of the apparatus for discharging the battery according to the fourth one or more embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

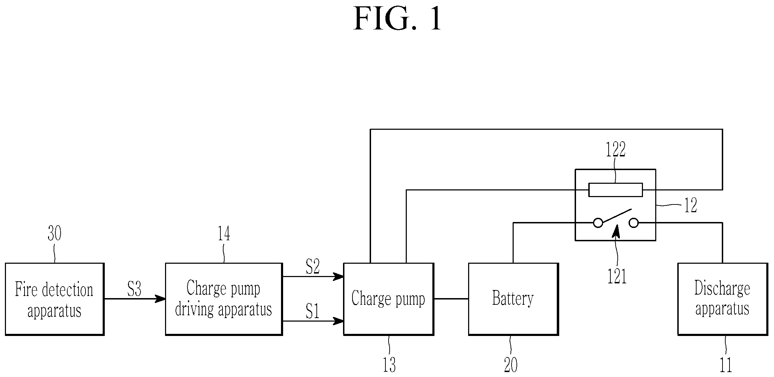

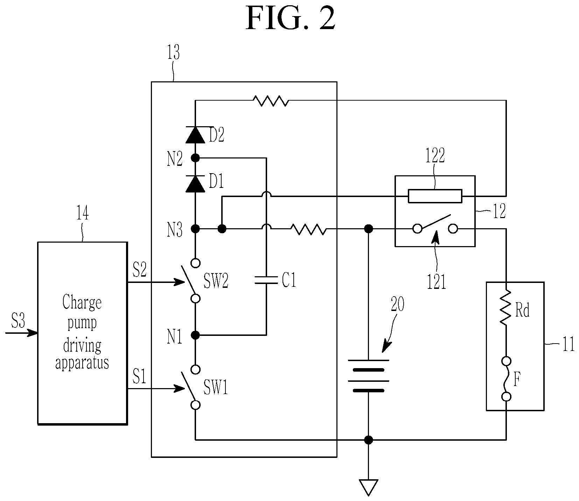

FIG. 1 schematically shows an apparatus for discharging a battery according to first one or more embodiments. FIG. 2 schematically shows a circuit configuration of the apparatus for discharging the battery according to the first one or more embodiments.

Referring to FIG. 1 and FIG. 2, the apparatus for discharging the battery according to the first one or more embodiments may include a discharger (e.g., discharge apparatus) 11, a switch 12, a charge pump 13, and a charge pump driver (e.g., a charge-pump-driving apparatus) 14.

The discharger 11 may be electrically connected to the battery 20 through a contact point apparatus 121 of the switch (e.g., first switch in the claims) 12. If the discharger 11 and the battery 20 are connected to each other, an energy charged in the battery 20 may be discharged by the discharger 11.

The discharger 11 may include a discharge resistor Rd. The discharge resistor Rd may be connected between the contact point apparatus 121 of the switch 12 and a ground. If the discharger 11 and the battery 20 are electrically connected through the switch 12, the discharge resistor Rd may discharge an electric energy charged in the battery 20. The discharge resistor Rd may be selected according to a capacity, a target discharge amount, a target discharge speed, or the like of the battery 20. The discharger 11 may further include a fuse F. The discharge resistor Rd and the fuse F may be connected in series between the contact point apparatus 121 of the switch 12 and a ground.

The switch 12 may switch an electrical connection between a positive electrode terminal of the battery 20 and the discharger 11. The switch 12 may include the contact point apparatus 121 and a contact point driver (e.g., contact-point-driving apparatus) 122. The contact point apparatus 121 may include contact points electrically connected to the positive electrode terminal of the battery 20 and the discharger 11, respectively. Opening and closing of the contact point apparatus 121 may be controlled by the contact point driver 122. If the contact point apparatus 121 is closed (e.g., the contact points are electrically connected to each other), the battery 20 and the discharger 11 may be electrically connected to each other. If the contact point apparatus 121 is opened (e.g., an electrical connection between the contact points is cut off), an electrical connection between the battery 20 and the discharger 11 may be cut off. The switch 12 may include a relay or a contactor. In this case, the contact point driver 122 may include a coil.

The contact point driver 122 may receive a driving electric power for controlling the opening and closing of the contact point apparatus 121 from the charge pump 13. If the driving electric power is supplied from the charge pump 13, the contact point driver 122 may electrically connect the battery 20 and the discharger 11 to each other by closing the contact point apparatus 121. If the driving electric power supplied from the charge pump 13 is cut off, the contact point driver 122 may block the electrical connection between the battery 20 and the discharger 11 by opening the contact point apparatus 121.

The charge pump 13 may include a capacitor C1. The charge pump 13 may charge the capacitor C1, or may supply an electric energy charged in the capacitor C1 to the contact point driver 122 of the switch 12 depending on an input control signal. If the control signal (e.g., first control signal in the claims) S1 is input, the charge pump 13 may electrically connect the battery 20 and the capacitor C1 so that the capacitor C1 is charged by an electric energy charged in the battery 20. If a control signal (e.g., second control signal in the claims) S2 is input, the charge pump 13 may electrically connect the capacitor C1 and the contact point driver 122 so that the contact point driver 122 operates by the electric energy charged in the capacitor C1.

The charge pump 13 may further include a switch (e.g., second switch in the claims) SW1 for switching an electric current flow between the capacitor C1 and the battery 20. The switch SW1 may be in an on state (or a closed state) if the control signal S1 is input from the charge pump driver 14. If the switch SW1 is turned on (or closed), a current path for charging the capacitor C1 with the electric energy charged in the battery 20 may be formed through the switch SW1. If the input of the control signal S1 from the charge pump driver 14 is stopped, the switch SW1 may be in an off state (or an open state). If the switch SW1 is turned off (or opened), the current path flowing through the switch SW1 may be blocked so that charging of the capacitor C1 by the battery 20 is stopped.

The charge pump 13 may further include a switch (e.g., third switch in the claims) SW2 for switching a current flow between the capacitor C1 and the contact point driver 122. The switch SW2 may be in an on state (or a closed state) if the signal S2 is input from the charge pump driver 14. If the switch SW2 is turned on (or closed), a current path for supplying the electric energy charged in the capacitor C1 to a driving electric power of the contact point driver 122 may be formed through the switch SW2. If the input of the control signal S2 from the charge pump driver 14 is stopped, the switch SW2 may be in an off state (or an open state). If the switch SW2 is turned off (or opened), the current path flowing through the switch SW2 may be blocked, and the driving electric power supplied from the capacitor C1 to the contact point driver 122 is blocked.

Referring to FIG. 2, the capacitor C1 may include one end electrically connected to a node N1, and may include the other end electrically connected to a node N2.

The switch SW1 may be electrically connected between the node N1 and a ground (e.g., between the one end of the capacitor C1 and the ground). The positive electrode terminal of the battery 20 may be electrically connected to the node N2 (e.g., the other end of the capacitor C1). If the switch SW1 is turned on, a current path for charging the capacitor C1 with an energy charged in the battery 20 may be connected through the switch SW1.

The switch SW2 may be electrically connected between the node N1 and the contact point driver 122 (e.g., between the one end of the capacitor C1 and a node N3). The contact point driver 122 may be electrically connected to the node N2 (e.g., the other end of the capacitor C1). Thus, if the switch SW2 is turned on, a current path for driving the contact point driver 122 with an energy charged in the capacitor C1 may be connected through the switch SW2.

The charge pump 13 may further include diodes D1 and D2 for limiting a direction of a current.

The charge pump 13 may further include the diode D1 electrically connected between the node N2 and the node N3. The diode D1 may include an anode terminal connected to the node N3, and may include a cathode terminal connected to the node N2. A current flow from the node N3 to the node N2 may be allowed by the diode D1, but a current flow from the node N2 to the node N3 may be blocked. The switch SW2 and the battery 20 may be electrically connected to the node N3, and may be electrically connected to the node N2 (e.g., the other end of the capacitor C1) through the node N3 and the diode D1.

The charge pump 13 may further include the diode D2 electrically connected between the node N2 and the contact point driver 122. The contact point driver 122 may be electrically connected to the node N2 (e.g., the other end of the capacitor C1) through the diode D2. The diode D2 may include an anode terminal connected to the node N2, and may include a cathode terminal connected to the contact point driver 122. A current flow from the node N2 to the contact point driver 122 may be allowed by the diode D2, but a current flow from the contact point driver 122 to the node N2 may be blocked.

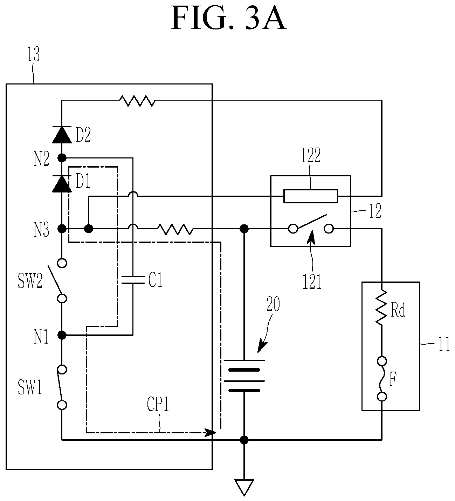

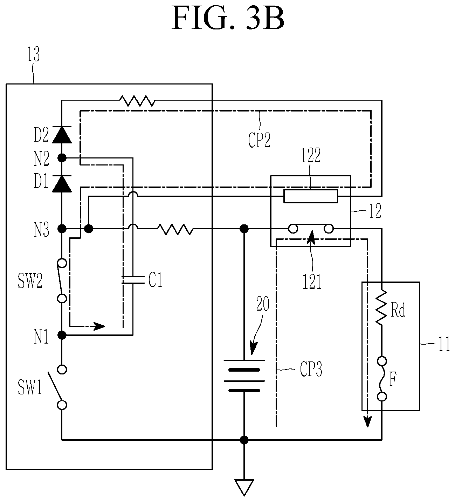

FIG. 3A and FIG. 3B are views for describing an operation of the charge pump 13 of FIG. 2.

Referring to FIG. 3A, if the switch SW1 of the charge pump 13 is turned on, a current path CP1, in which a current supplied by the battery 20 flows sequentially through the node N3, the diode D1, the node N2, the capacitor C1, and the switch SW1, may be connected/formed. The capacitor C1 may be charged by the current path CP1.

Referring to FIG. 3B, if the switch SW2 of the charge pump 13 is turned on, a current path CP2, in which a current supplied by the capacitor C1 flows sequentially through the node N2, the diode D2, the contact point driver 122, and the switch SW2 may be connected/formed. The contact point driver 122 may be operated by the current path CP2 so that the switch 12 is in an on state. If the switch 12 is turned on (e.g., if contact points of the contact point apparatus 121 are electrically connected to each other), a discharge path CP3, where an electric energy charged in the battery 20 is discharged by the discharger 11, may be connected/formed.

Referring back to FIG. 1 and FIG. 2, the charge pump driver 14 may receive a state signal S3 corresponding to a result of detecting a fire event of the battery 20 from a fire detector (e.g., fire detection apparatus) 30. The charge pump driver 14 may selectively output the control signals S1 and S2 according to the received state signal S3. If the state signal S3 received from the fire detector 30 indicates a normal state, the charge pump driver 14 may output the control signal S1 to the charge pump 13. While the control signal S1 is output, an output of the control signal S2 may be blocked. If the state signal S3 received from the fire detector 30 indicates an occurrence of the fire event, the charge pump driver 14 may output the control signal S2 to the charge pump 13. While the control signal S2 is output, an output of the control signal S1 may be blocked.

The fire detector 30 may detect the occurrence of the fire event of the battery 20 through monitoring of a state of the battery 20, and may output the state signal S3 corresponding to the detection result. For example, the fire detector 30 may output the state signal S3 with a high level if the battery 20 is in a normal state, and may output the state signal S3 with a low level if the occurrence of the fire event is detected from the battery 20. In some embodiments, the fire detector 30 may output the state signal S3 with a low level if the battery 20 is in the normal state, and may output the state signal S3 with a high level if the occurrence of the fire event is detected from the battery 20. The fire event may include not only an ignition event of the battery 20, but also may include an event that may potentially lead to a fire, such as thermal runaway of the battery 20.

If the battery 20 is a battery that constitutes an energy storage system (ESS) (e.g., a battery rack, a battery bank, or the like), the fire detector 30 may be a portion of a battery management system (BMS) (e.g., a rack BMS, a system BMS, or the like) or an energy management system (EMS) that constitutes the ESS, or an apparatus that operates independently of them. If the battery 20 is a battery pack installed in an electronic apparatus, such as a vehicle or the like, the fire detector 30 may be a portion of a BMS that constitutes the battery pack, or may be a portion of a control apparatus (e.g., a control apparatus of the vehicle) outside the battery pack.

The fire detector 30 may receive a driving voltage by an external power source or an auxiliary power source that is galvanically insulated from the battery 20. In this case, the charge pump driver 14 may generate and output the control signals S1 and S2, so that a side that receives the state signal S3 and a side that outputs the control signals S1 and S2 are galvanically insulated.

Each switch SW1 or SW2 included in the charge pump 13 may include a semiconductor element, such as a bipolar junction transistor (BJT), a field effect transistor (FET), an insulating gate bipolar transistor (IGBT), a phototransistor, or the like. The switch SW1 or SW2 of the charge pump 13 may include an electronic switch, such as a relay, a contactor, or the like.

The charge pump driver 14 may be variously configured depending on a type or the like of the switch SW1 or SW2. The charge pump driver 14 may be differently configured depending on the signal level (e.g., the high level or the low level) where the state signal S3 indicates each state (e.g., the normal state or a state of the occurrence of the fire event).

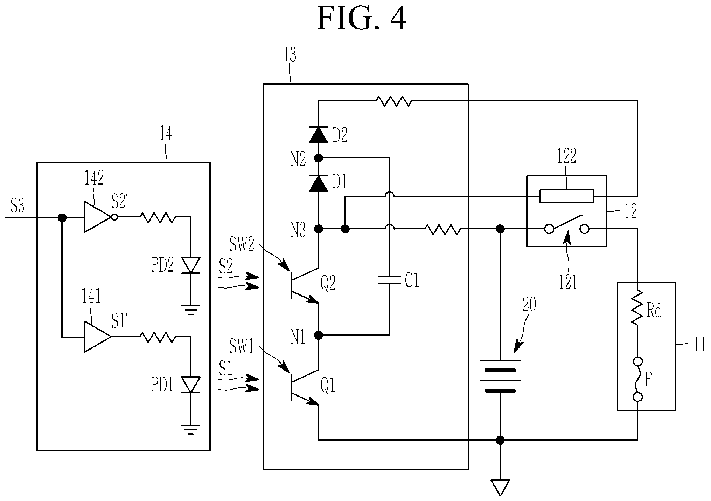

FIG. 4 shows examples of circuit configurations of the charge pump 13 and the charge pump driver 14 if each switch SW1 or SW2 of the charge pump 13 of FIG. 2 is the phototransistor.

Referring to FIG. 4, each switch SW1 and SW2 of the charge pump 13 may include the phototransistor Q1 or Q2 that is turned on or turned off by an optical signal.

The phototransistor Q1 may include first and second terminals that are electrically connected to one end of the capacitor C1 and a ground, respectively. The phototransistor Q1 may be turned on if the control signal S1, which is the optical signal, is received from the charge pump driver 14. If the phototransistor Q1 is turned on, a current may be supplied to the capacitor C1 from the battery 20 so that the capacitor C1 is charged.

The phototransistor Q2 may include first and second terminals that are electrically connected to the contact point driver 122 of the switch 12 and the one end of the capacitor C1, respectively. The phototransistor Q2 may be turned on if the control signal S2, which is the optical signal, is received from the charge pump driver 14. If the phototransistor Q2 is turned on, a current supplied by the capacitor C1 may be transferred to the contact point driver 122 of the switch 12. The contact point apparatus 121 may be closed, and an energy charged in the battery 20 may be discharged by the discharger 11.

The charge pump driver 14 may include a buffer 141 and a light-emitting element to output the control signal S1, which is the optical signal, to the phototransistor Q1 of the charge pump 13. For example, the light-emitting element may include a photodiode PD1 of FIG. 4. If the buffer 141 receives the state signal S3 with the high level indicating the normal state from the fire detector 30, the buffer 141 may transfer the state signal S3 to output a control signal S1' with a high level. If the control signal S1' with the high level is input from the buffer 141, the photodiode PD1 may output the control signal S1, which is the optical signal, to turn on the phototransistor Q1 of the charge pump 13.

The charge pump driver 14 may include an inverter 142 and a light-emitting element to output the control signal S2, which is the optical signal, to the phototransistor Q2 of the charge pump 13. For example, the light-emitting element may include a photodiode PD2 of FIG. 4. If the inverter 142 receives the state signal S3 with the low level indicating the occurrence of the fire event from the fire detector 30, the inverter 142 may invert the state signal S3 to output a control signal S2' with a high level. If the control signal S2' with the high level is input from the inverter 142, the photodiode PD2 may output the control signal S2, which is the optical signal, to turn on the phototransistor Q2 of the charge pump 13.

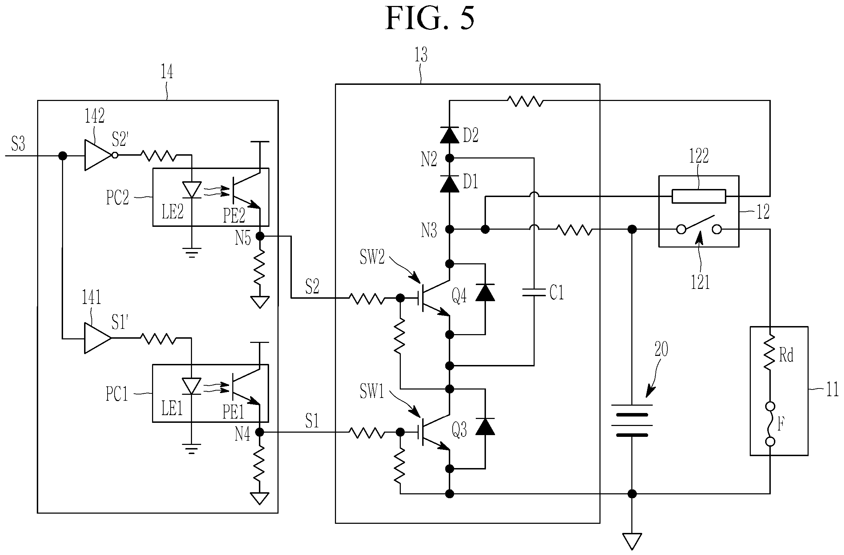

FIG. 5 shows examples of circuit configurations of the charge pump 13 and the charge pump driver 14 if each switch SW1 or SW2 of the charge pump 13 of FIG. 2 is a transistor.

Referring to FIG. 5, each switch SW1 or SW2 of the charge pump 13 may include the transistor Q3 or Q4 that is turned on or turned off depending on an electric signal input to a control terminal.

The transistor Q3 may include first and second terminals that are electrically connected to the one end of the capacitor C1 and a ground, respectively, and also may include a control terminal that is electrically connected to the charge pump driver 14. The transistor Q3 may be turned on or off depending on the control signal S1. The transistor Q3 may be turned on if the control signal S1 is input, and may be turned off if the input of the control signal S1 is stopped. If the transistor Q3 is turned on, a current may be supplied to the capacitor C1 by the battery 20 so that the capacitor C1 is charged.

The transistor Q4 may include first and second terminals respectively electrically connected to the contact point driver 122 of the switch 12 and the one end of the capacitor C1, and also may include a control terminal electrically connected to the charge pump driver 14. The transistor Q4 may be turned on or off depending on the control signal S2. The transistor Q4 may be turned on if the control signal S2 is input, and may be turned off if the input of the control signal S2 is stopped. If the transistor Q4 is turned on, a current supplied by the capacitor C1 may be transferred to the contact point driver 122 of the switch 12. Thus, the contact point apparatus 121 may be closed so that an energy charged in the battery 20 is discharged by the discharger 11.

For example, each transistor Q3 or Q4 of FIG. 5 may be an NPN transistor in which the control terminal is a base terminal, and in which the first terminal and the second terminal are a collector terminal and an emitter terminal, respectively. The transistor Q3 may be turned on if the control signal S1 with the high level is input. The transistor Q4 may be turned on if the control signal S2 with the high level is input.

The charge pump driver 14 may include a buffer 141 and a photocoupler PC1 to output the control signal S1 to the transistor Q3 of the charge pump 13. The photocoupler PC1 may include a light-emitting element LE1 connected between an output terminal of the buffer 141 and a ground, and a light-receiving element PE1 connected between a power source node and an output node N4. If the buffer 141 receives the state signal S3 with the high level indicating the normal state from the fire detector 30, the buffer 141 may output a control signal S1' with a high level by transferring the state signal S3. The light-emitting element LE1 of the photocoupler PC1 may output an optical signal by emitting light if the control signal S1' with the high level is input from the buffer 141. If the light-receiving element PE1 of the photocoupler PC1 receives the optical signal from the light-emitting element LE1, the light-receiving element PE1 of the photocoupler PC1 may output the control signal S1 with the high level to the output node N4 by connecting the power source node and the output node N4. If the control signal S1 with the high level is output to the output node N4, the transistor Q3 may be turned on.

The charge pump driver 14 may include an inverter 142 and a photocoupler PC2 to output the control signal S2 to the transistor Q4 of the charge pump 13. The photocoupler PC2 may include a light-emitting element LE2 connected between an output terminal of the inverter 142 and a ground, and a light-receiving element PE2 connected between a power source node and an output node N5. If the inverter 142 receives the state signal S3 with the low level indicating the occurrence of the fire event from the fire detector 30, the inverter 142 may output a control signal S2' with a high level by inverting and transferring the state signal S3. The light-emitting element LE2 of the photocoupler PC2 may output an optical signal by emitting light if the control signal S2' with the high level is input from the inverter 142. If the light-receiving element PE2 of the photocoupler PC2 receives the optical signal from the light-emitting element LE2, the light-receiving element PE2 of the photocoupler PC2 may output the control signal S2 with the high level to the output node N5 by connecting the power source node and the output node N5. If the control signal S2 with the high level is output to the output node N5, the transistor Q4 may be turned on.

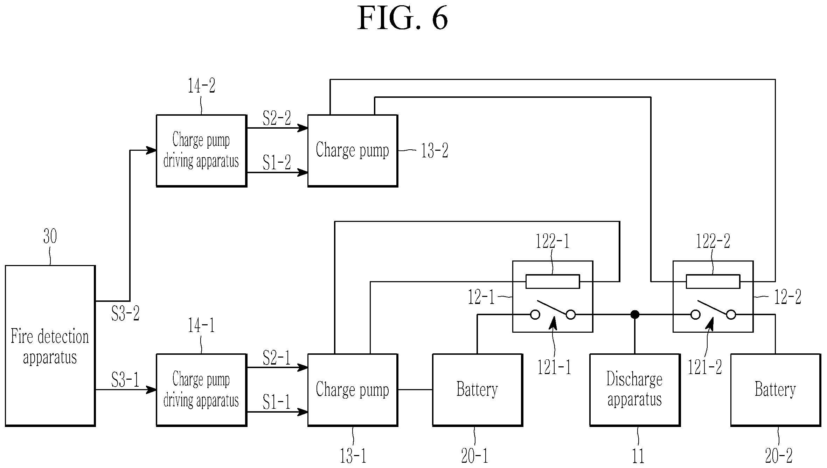

FIG. 6 schematically shows an apparatus for discharging the battery according to second one or more embodiments. FIG. 6 shows an example of the battery discharger for discharging only a battery in which a fire event occurs in a system including a plurality of batteries, such as an ESS.

Referring to FIG. 6, the apparatus for discharging the battery according to the second one or more embodiments may include a plurality of switches 12-1 and 12-2, a plurality of charge pumps 13-1 and 13-2, and a plurality of charge pump drivers 14-1 and 14-2 to discharge each of a plurality of batteries 20-1 and 20-2. Only one discharger 11 may be used to discharge the plurality of batteries 20-1 and 20-2. Each switch 12-1 or 12-2, each charge pump 13-1 or 13-2, and each charge pump driver 14-1 or 14-2 may be the same as the switch 12, the charge pump 13, and the charge pump driver 14 described above with reference to FIGS. 2 to 5. Thus, in the following description, each state signal S3-1 or S3-2 may correspond to the state signal S3 of FIG. 2, each control signal S1-1 or S1-2 may correspond to the control signal S1 of FIG. 2, and each control signals S2-1 or S2-2 may correspond to the control signal S2 of FIG. 2.

The discharger 11 may be electrically connected to each battery 20-1 or 20-2 through each switch 12-1 or 12-2, respectively. If the discharger 11 and each battery 20-1 or 20-2 are connected to each other, an energy charged in each battery 20-1 or 20-2 may be discharged by the discharger 11.

Each switch 12-1 or 12-2 may respectively switch an electrical connection between the battery 20-1 or 20-2 respectively corresponding to each switch 12-1 or 12-2 and the discharger 11. Each switch 12-1 or 12-2 may respectively receive a driving electric power from the charge pump 13-1 or 13-2 respectively corresponding to each switch 12-1 or 12-2. If the driving electric power is supplied from the charge pump 13-1 or 13-2, each switch 12-1 or 12-2 may electrically connect the battery 20-1 or 20-2 corresponding to each switch 12-1 or 12-2 to the discharger 11, respectively.

Each charge pump 13-1 or 13-2 may include a capacitor (e.g., the capacitor C1 of FIG. 2). Each charge pump 13-1 or 13-2 may charge the capacitor C1, or may supply an electric energy charged in the capacitor C1 as a driving electric power of the switch 12-1 or 12-2 corresponding to each charge pump 13-1 or 13-2 according to an input control signal. If the control signal S1-1 or S1-2 is input, each charge pump 13-1 or 13-2 may electrically connect the battery 20-1 or 20-2 corresponding to each charge pump 13-1 or 13-2 to the capacitor C1. Thus, the capacitor C1 may be charged by an electric energy charged in the battery 20-1 or 20-2. If the control signal S2-1 or S2-2 is input, each charge pump 13-1 or 13-2 may electrically connect a contact point driver 122-1 or 122-2 of the switch 12-1 or 12-2 corresponding to each charge pump 13-1 or 13-2 to the capacitor C1. Thus, the contact point driver 122-1 or 122-2 of the switch 12-1 or 12-2 corresponding to each charge pump 13-1 or 13-2 may operate by an electric energy charged in the capacitor C1 so that the contact point driver 122-1 or 122-2 of the switch 12-1 or 12-2 corresponding to each charge pump 13-1 or 13-2 is closed.

Each charge pump driver 14-1 or 14-2 may respectively receive the state signal S3-1 or S3-2 according to a result of detecting the fire event of the battery 20-1 or 20-2 respectively corresponding to each charge pump driver 14-1 or 14-2 from a fire detector 30. Each charge pump driver 14-1 or 14-2 may selectively output the control signal S1-1 or S1-2 or the control signal S2-1 or S2-2 according to the received state signal S3-1 or S3-2, respectively. If the state signal S3-1 or S3-2 received from the fire detector 30 indicates a normal state of the battery 20-1 or 20-2 corresponding to each charge pump driver 14-1 or 14-2, each charge pump driver 14-1 or 14-2 may output the control signal S1-1 or S1-2 to the charge pump 13-1 or 13-2 corresponding to each charge pump driver 14-1 or 14-2. While the control signal S1-1 or S1-2 is respectively output from each charge pump driver 14-1 or 14-2, an output of the control signal S2-1 or S2-2 may be blocked. If the state signal S3-1 or S3-2 received from the fire detector 30 indicates an occurrence of the fire event of the battery 20-1 or 20-2 corresponding to each charge pump driver 14-1 or 14-2, each charge pump driver 14-1 or 14-2 may output the control signal S2-1 or S2-2 to the charge pump 13-1 or 13-2 corresponding to each charge pump driver 14-1 or 14-2. While the control signal S2-1 or S2-2 is output, an output of the control signal S1-1 or S1-2 may be blocked.

The fire detector 30 may detect the occurrence of the fire event in each battery 20-1 or 20-2 through monitoring of a state of each battery 20-1 or 20-2. If each battery 20-1 or 20-2 is in the normal state, the fire detector 30 may output the state signal S3-1 or S3-2 indicating the normal state to the charge pump driver 14-1 or 14-2 corresponding to the state signal S3-1 or S3-2. If the fire event is detected in any one of the batteries 20-1 and 20-2, the fire detector 30 may output the state signal S3-1 or S3-2 indicating the occurrence of the fire event to the charge pump driver 14-1 or 14-2 corresponding to the state signal S3-1 or S3-2.

As shown in FIG. 6, the apparatus for discharging the battery may include a discharge path for discharging the battery if the fire event occurs for each of the batteries 20-1 and 20-2, so that only the battery in which the fire event occurs is quickly discharged.

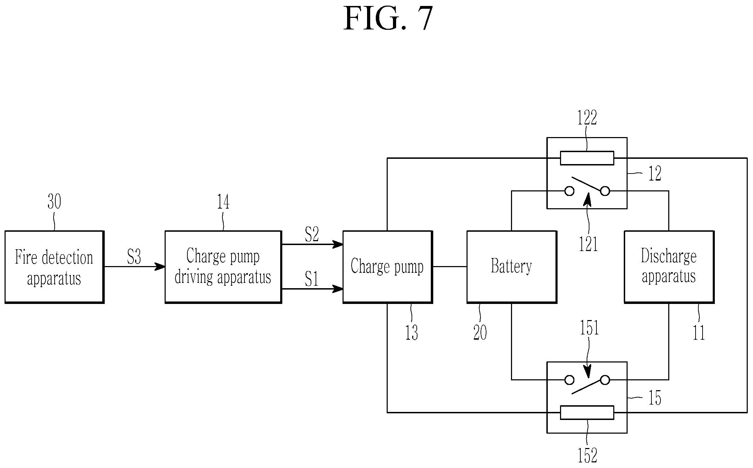

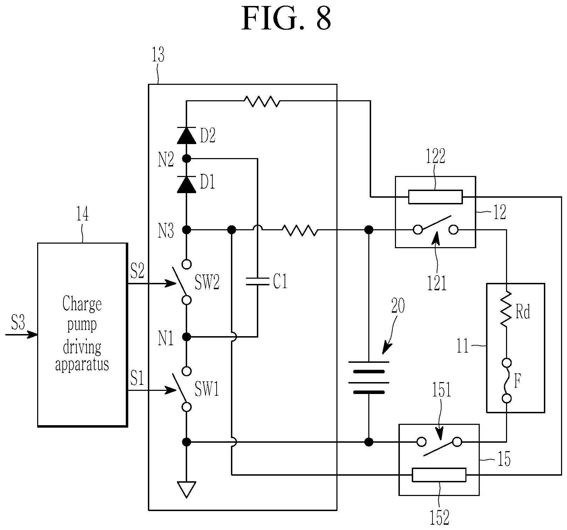

FIG. 7 schematically shows an apparatus for discharging the battery according to third one or more embodiments. FIG. 8 schematically shows a circuit configuration of the apparatus for discharging the battery according to the third one or more embodiments.

Referring to FIG. 7 and FIG. 8, the apparatus for discharging the battery according to the third one or more embodiments may further include a switch (e.g., fourth switch in the claims) 15 compared with the battery discharger of FIG. 1 and FIG. 2. In the following description, a detailed description of a component that is the same as or similar to that of the battery discharger of FIG. 1 and FIG. 2 may be omitted to avoid a duplicate description.

The switch 15 may switch an electrical connection between a negative electrode terminal of the battery 20 and the discharger 11. The switch 15 may include a contact point apparatus 151 and a contact point driver 152. The contact point apparatus 151 may include contact points electrically connected to the negative electrode terminal of the battery 20 and the discharger 11, respectively. Opening and closing of the contact point apparatus 151 may be controlled by the contact point driver 152. If the contact point apparatus 151 is closed (e.g., the contact points are electrically connected to each other), the negative electrode terminal of the battery 20 and the discharger 11 may be electrically connected to each other. If the contact point apparatus 151 is opened (e.g., an electrical connection between the contact points is cut off), an electrical connection between the negative electrode terminal of the battery 20 and the discharger 11 may be cut off. The switch 15 may include a relay or a contactor. In this case, the contact point driver 152 may include a coil.

The contact point driver 152 may receive a driving electric power for controlling the opening and closing of the contact point apparatus 151 from the charge pump 13. If the driving electric power is supplied from the charge pump 13, the contact point driver 152 may close the contact point apparatus 151 to electrically connect the negative electrode terminal of the battery 20 and the discharger 11 to each other. If the driving electric power supplied from the charge pump 13 is cut off, the contact point driver 152 may open the contact point apparatus 151 to block the electrical connection between the negative electrode terminal of the battery 20 and the discharger 11.

The contact point driver 122 of the switch 12 and the contact point driver 152 of the switch 15 may be connected in series. Thus, if the switch SW2 of the charge pump 13 is turned on, a current path, in which a current supplied by the capacitor C1 sequentially flows through the node N2, the diode D2, the contact point driver 122 of the switch 12, the contact point driver 152 of the switch 15, and the switch SW2, may be connected/formed.

The contact point drivers 122 and 152 may be operated by the current path so that all of the contact point apparatuses 121 and 151 of the switches 12 and 15 are closed. Thus, both terminals of the battery 20 may be electrically connected to the discharger 11, so that a discharge path through which an electric energy charged in the battery 20 is discharged by the discharger 11 may be connected.

For example, if the switch SW2 of the charge pump 13 is turned off, an electric power supply for all of the contact point drivers 122 and 152 may be blocked. All of the contact point apparatuses 121 and 151 of the switches 12 and 15 may be opened, so that the both terminals of the battery 20 are completely separated from the discharger 11.

In FIG. 7 and FIG. 8, a case in which both switches 12 and 15 are operated using the charge pump 13 and the charge pump driver 14 is shown as an example. The apparatus for discharging the battery may also include the charge pump 13 and the charge pump driver 14 to operate the switch 15.

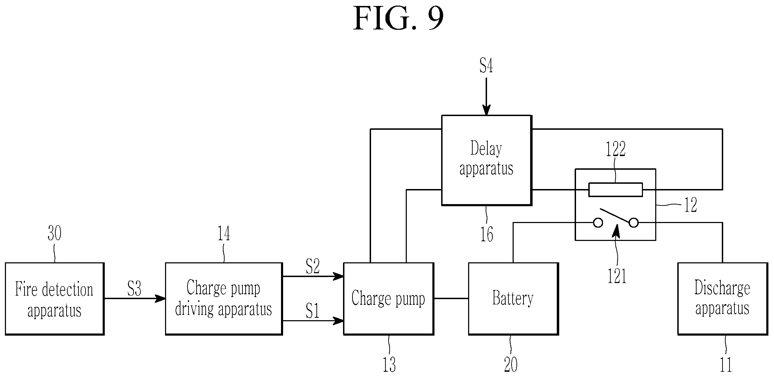

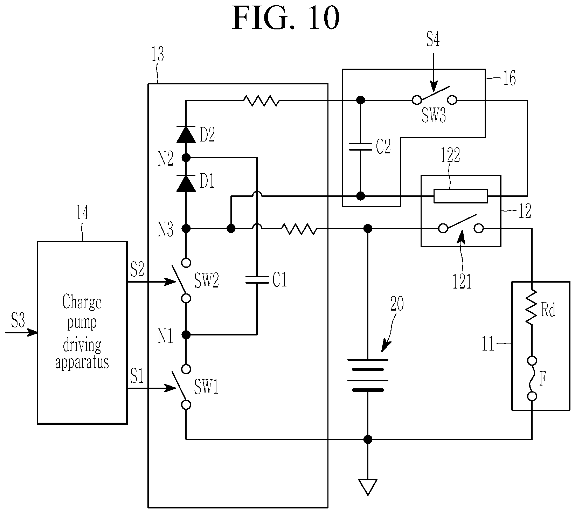

FIG. 9 schematically shows an apparatus for discharging the battery according to fourth one or more embodiments. FIG. 10 schematically shows a circuit configuration of the apparatus for discharging the battery according to the fourth one or more embodiments.

Referring to FIG. 9 and FIG. 10, the apparatus for discharging the battery according to the fourth one or more embodiments may further include a delay (e.g., a delay apparatus) 16 compared with the battery discharger of FIG. 1 and FIG. 2. In the following description, a detailed description of a component that is the same as or similar to that of the battery discharger of FIG. 1 and FIG. 2 may be omitted to avoid a duplicate description.

The delay 16 may delay a time at which the switch 12 is operated by an electric power supplied by the charge pump 13. The delay 16 may be electrically connected between the charge pump 13 and the contact point driver 122 of the switch 12. The delay 16 may include a capacitor C2 and a switch (e.g., fifth switch in the claims) SW3.

The capacitor C2 may be electrically connected between both ends of the contact point driver 122. The capacitor C2 may include one end electrically connected between the node N2 and the contact point driver 122, and the other end electrically connected between the contact point driver 122 and the switch SW2. The capacitor C2 may charge an electric energy supplied from the capacitor C1, or may supply a driving electric power to the contact point driver 122 with an electric energy charged in the capacitor C2.

The switch SW3 may be electrically connected between one end of the capacitor C2 and the contact point driver 122. The switch SW3 may include a first terminal connected to a first terminal of the capacitor C2, a second terminal electrically connected to the contact point driver 122, and a control terminal. The switch SW3 may maintain an on state while a control signal (e.g., third control signal in the claims) S4 is input, and may be in an off state if the control signal S4 is not input.

If the switch SW2 of the charge pump 13 is turned on, an electric energy supplied from the capacitor C1 may be charged in the capacitor C2. The switch SW3 may be maintained in the off state for a period of time (e.g., predetermined period of time) from a time point that the switch SW2 is turned on. An electric energy charged in the capacitor C2 may not be supplied to the contact point driver 122 until the switch SW3 is turned on.

If the switch SW2 is turned on and a time (e.g., predetermined time) elapses, the control signal S4 may be applied to the switch SW3 so that the switch SW3 is turned on. The control signal S4 may be input from an external control device of the battery 20, such as the fire detector 30 or the like. The control signal S4 may also be input from a BMS of the battery 20.

If the switch SW2 is turned on, an electric energy charged in the capacitor C2 may be transferred to the contact point driver 122 through the switch SW3, so that the contact point driver 122 may operate. For example, the contact point apparatus 121 may be closed by the operation of the contact point driver 122.

The delay 16 may allow the contact point driver 122 to maintain a stable operation for a time (e.g., predetermined time) by an energy charged in the capacitor C2, even if the switch SW2 is turned off again. For example, a level of a voltage applied to the contact point driver 122 and a time for which the voltage is applied may be adjusted by appropriately adjusting a capacity ratio of the capacitor C1 and the capacitor C2.

Although the present disclosure has been described above by limited embodiments and the drawings, the present disclosure is not limited thereto, and various modifications and variations may be made within an equivalent scope of the technical idea of the present disclosure and claims to be described below by those of ordinary skill in the art, functional equivalents of the claims to be included therein.

### Description of Some of the Reference Characters

| | | | |
|---|---|---|---|
| 11: | discharger | 12, 12-1, 12-2, 15: | switch |
| 121, 121-1, 121-2, 151: | contact point apparatus | | |
| 122, 122-1, 122-2, 152: | contact point driver | | |
| 13, 13-1, 13-2: | charge pump | 14, 14-1, 14-2: | charge pump driver |
| 141: | buffer | 142: | inverter |
| 16: | delay | 20, 20-1, 20-2: | battery |
| Rd: | discharge resistor | F: | fuse |
| SW1, SW2, SW3: | switch | C1, C2: | capacitor |
| D1, D2: | diode | Q1, Q2: | phototransistor |
| PD1, PD2: | photodiode | Q3, Q4: | transistor |
| PC1, PC2: | photocoupler | | |

## Claims

1. An apparatus for discharging a battery (20, 20-1, 20-2), the apparatus comprising:
a discharger (11);
a first switch connected between the discharger (11) and the battery (20, 20-1, 20-2); and
a charge pump (13, 13-1, 13-2) that comprises a first capacitor (C1), that is configured to charge the first capacitor (C1) with an electric energy charged in the battery (20, 20-1, 20-2) when a first control signal indicating a normal state is input, and that is configured to connect the discharger (11) and the battery (20, 20-1, 20-2) by operating the first switch with an electric energy charged in the first capacitor (C1) when a second control signal indicating an occurrence of a fire event is input.

2. The apparatus for discharging a battery (20, 20-1, 20-2) as claimed in claim 1, wherein the first switch comprises:
a contact point apparatus (121, 151) comprising contact points respectively connected to the battery (20, 20-1, 20-2) and to the discharger (11); and
a contact point driver (122, 122-1, 152) configured to control a connection between the contact points.

3. The apparatus for discharging a battery (20, 20-1, 20-2) as claimed in claim 2, wherein the charge pump (13, 13-1, 13-2) further comprises:
a second switch on a first current path for charging the first capacitor (C1) with the electric energy charged in the battery (20, 20-1, 20-2), and configured to connect the first current path when the first control signal is input; and
a third switch on a second current path for supplying a driving electric power to the contact point driver (122, 122-1, 152) with the energy charged in the first capacitor (C1), and configured to connect the second current path when the second control signal is input.

4. The apparatus for discharging a battery (20, 20-1, 20-2) as claimed in claim 3, wherein the first capacitor (C1) is connected between a first node and a second node,
wherein the second switch is connected between the first node and a ground, and
wherein the battery (20, 20-1, 20-2) is connected between the second node and the ground.

5. The apparatus for discharging a battery (20, 20-1, 20-2) as claimed in claim 4, wherein the third switch is connected between the first node and the contact point driver (122, 122-1, 152), and
wherein the contact point driver (122, 122-1, 152) is connected between the second node and the third switch.

6. The apparatus for discharging a battery (20, 20-1, 20-2) as claimed in claim 4 or 5, wherein the charge pump (13, 13-1, 13-2) further comprises:
a first diode (D1) comprising an anode terminal connected to the battery (20, 20-1, 20-2), and a cathode terminal connected to the second node; and
a second diode (D2) comprising an anode terminal connected to the second node, and a cathode terminal connected to the contact point driver (122, 122-1, 152).

7. The apparatus for discharging a battery (20, 20-1, 20-2) as claimed in claims 3 to 6, further comprising a charge pump driver (14, 14-1, 14-2) configured to receive a state signal indicating a state of the occurrence of the fire event of the battery (20, 20-1, 20-2), to output the first control signal to the charge pump (13, 13-1, 13-2) when the state signal indicates the normal state, and to output the second control signal to the charge pump (13, 13-1, 13-2) when the state signal indicates the occurrence of the fire event.

8. The apparatus for discharging a battery (20, 20-1, 20-2) as claimed in claim 7, wherein the second switch and the third switch comprise a phototransistor (Q1, Q2), and
wherein the first control signal and the second control signal comprise an optical signal.

9. The apparatus for discharging a battery (20, 20-1, 20-2) as claimed in claim 8, wherein the charge pump driver (14, 14-1, 14-2) comprises:
a buffer (141) configured to transfer the state signal;
a first photodiode (PD1) configured to receive an output signal of the buffer (141), and to output the first control signal comprising the optical signal according to the output signal of the buffer (141);
an inverter (142) configured to invert the state signal, and to output the inverted state signal; and
a second photodiode (PD2) configured to receive the inverted state signal from the inverter (142), and to output the second control signal comprising the optical signal according to the inverted state signal from the inverter (142).

10. The apparatus for discharging a battery (20, 20-1, 20-2) as claimed in claims 7 to 9, wherein the second switch and the third switch comprise a transistor (Q3, Q4), and
wherein the charge pump driver (14, 14-1, 14-2) comprises:
a buffer (141) configured to transfer the state signal;
a first photocoupler (PC1) configured to receive an output signal of the buffer (141), and to output the first control signal to a control terminal of the second switch according to the output signal of the buffer (141);
an inverter (142) configured to invert the state signal, and to output the inverted state signal; and
a second photocoupler (PC2) configured to receive the inverted state signal from the inverter (142), and to output the second control signal to a control terminal of the third switch according to the inverted state signal from the inverter (142).

11. The apparatus for discharging a battery (20, 20-1, 20-2) as claimed in claims 3 to 10, further comprising a fourth switch connected between a negative electrode terminal of the battery (20, 20-1, 20-2) and the discharger (11),
wherein the first switch is connected between a positive electrode terminal of the battery (20, 20-1, 20-2) and the discharger (11), and
wherein contact point drivers (122, 122-1, 152) of the first switch and the fourth switch are connected in series on the second current path.

12. The apparatus for discharging a battery (20, 20-1, 20-2) as claimed in claims 3 to 11, further comprising a second capacitor (C2) connected between both ends of the contact point driver (122, 122-1, 152).

13. The apparatus for discharging a battery (20, 20-1, 20-2) as claimed in claim 12, further comprising a fifth switch connected between one end of the second capacitor (C2) and the contact point driver (122, 122-1, 152), and configured to connect a current path supplying an electric energy charged in the second capacitor (C2) as a driving electric power of the contact point driver (122, 122-1, 152) when a third control signal is input,
wherein the second capacitor (C2) is configured to be charged by a current supplied from the first capacitor (C1) when the third switch is turned on in a state in which the fifth switch is turned off, and
wherein the second capacitor (C2) is configured to supply the electric energy charged in the second capacitor (C2) as the driving electric power of the contact point driver (122, 122-1, 152) when the fifth switch is turned on.

14. The apparatus for discharging a battery (20, 20-1, 20-2) as claimed in claims 2 to 13, wherein the first switch comprises a relay or a contactor, and
wherein the contact point driver (122, 122-1, 152) is a coil.

15. The apparatus for discharging a battery (20, 20-1, 20-2) as claimed in claims 1 to 14, wherein the apparatus for discharging the battery (20, 20-1, 20-2) includes a discharge path for discharging the battery if the fire event occurs for each of the batteries (20-1, 20-2), so that only the battery (20-1, 20-2) in which the fire event occurs is quickly discharged.
